# EUROPEAN PATENT SPECIFICATION

(11) **EP 3 705 463 B1**
(45) Date of publication and mention of the grant of the patent: **11.11.2026**
(21) Application number: 20172148.7
(22) Date of filing: 05.08.2014
(51) Int. Cl.: C04B 35/04, C04B 35/66

(54) **CASTABLE REFRACTORY COMPOSITIONS, THEIR USE IN THE FORMATION OF REFRACTORY LININGS, AND METHODS FOR PRODUCING SUCH COMPOSITIONS**
GIESSBARE FEUERFESTE ZUSAMMENSETZUNGEN, IHRE VERWENDUNG ZUR HERSTELLUNG VON FEUERFESTEN AUSKLEIDUNGEN UND VERFAHREN ZUR HERSTELLUNG SOLCHER ZUSAMMENSETZUNGEN
COMPOSITIONS RÉFRACTAIRES COULABLES, LEUR UTILISATION DANS LA FORMATION DE GARNITURES RÉFRACTAIRES ET PROCÉDÉS DE PRODUCTION DE CES COMPOSITIONS

(30) Priority: 05.08.2013 IN 2333DE2013
(43) Date of publication of application: 09.09.2020
(62) Document number(s) of the earlier application(s) in accordance with Art. 76 EPC: 14758304.1 / 3 030 535
(73) Proprietor: Calderys France, S.A.S., 51120 Sézanne (FR)
(72) Inventor: CHAKRABORTY, Indra Nath, 440033 Nagpur (IN); SINHA, Saumen, 440010 Nagpur (IN); BISEN, Rajesh Tilakchand, 441108 Butibori (IN)
(74) Representative: Haseltine Lake Kempner LLP

(56) References cited:
- EP-A1- 0 557 536
- EP-A1- 0 940 376
- EP-A1- 2 072 482
- EP-A2- 1 058 077
- WO-A1-86/05481
- WO-A1-92/17419
- DE-A1- 102006 031 700
- US-B1- 6 846 766
- ANEZIRIS C G ET AL: "Carbon containing castables and more", ADVANCES IN SCIENCE AND TECHNOLOGY,, vol. 70, 1 January 2010 (2010-01-01), pages 72 - 81, XP009180750

## Description

### FIELD OF THE INVENTION

The present invention concerns magnesia-based castable refractory compositions. The invention further concerns the use of the magnesia-based castable refractory compositions, as well as methods for producing monolithic refractory linings using said magnesia-based castable refractory compositions.

### BACKGROUND OF THE INVENTION

Refractories are materials having properties that make them suitable for use as heat-resistant barriers in high temperature applications. Magnesia (magnesium oxide, MgO) refractory materials have been used extensively in the ferrous and nonferrous industries as linings for metallurgical vessels, ladles, furnaces, crucibles and other equipment, to protect against the chemical and mechanical strains caused by liquidised metal and/or slag. Magnesia refractories often contain substantial amounts of elemental carbon or carbonaceous compounds to improve performance. Traditionally, magnesia linings have been produced by assembling magnesia or magnesia-carbon bricks against an interior wall of the vessel or equipment to be protected.

Unlike linings assembled from discrete pre-formed bricks, unshaped refractory materials have the ability to form joint-less linings and are often referred to as monolithics. Monolithics are particularly useful as linings for cupola hearths and siphons, blast furnaces, main, secondary and tilting runners, and more generally vessels or vessel spouts, ladles, tundishes, reaction chambers and troughs that contain, direct the flow of, or are suitable for facilitating industrial treatment of liquid metals and slags, or of any other high temperature liquids, solids or gases. Magnesium oxide (monolithic) refractories are preferably used in areas where slags and atmospheres are basic, since they are stable to alkaline materials.

Magnesia has a strong affinity to water, in liquid or gaseous form, and reacts with water to form brucite. The formation or presence of hydrated magnesia in a refractory composition has a strong detrimental impact on the final performance of a monolithic refractory lining. For example, the flaky structure of brucite crystals formed around magnesia particles can form lumps in a particulate refractory composition, which inhibits the casting process after formation of a castable (wet) mixture. If hydration of magnesia occurs after installation of a lining, this can result in cracking of the lining, since the transformation of magnesia into brucite takes place with a high volume expansion. In the past, additives have been used that are intended to inhibit MgO hydration, such as for example tartaric acid, citric acid, boric acid, magnesium fluoride and microsilica. The presence of such additives however has detrimental effects on flow properties, mechanical resistance, refractoriness (stability at elevated temperature), cost, among others.

Currently, magnesia-carbon monolithic formulations are not generally available. Castable magnesia compositions may be used as gunning materials for repairing magnesia-carbon brick linings. The provision of castable magnesia-carbon compositions would on the one hand allow the installation of monolithic magnesia-carbon linings, and on the other hand the use of these composition as a gunning material for repairing magnesia-carbon brick linings having improved compatibility with the brick linings.

Important properties of refractories are their mechanical, chemical and thermal resistances. Mechanical resistance is commonly assessed using modulus of rupture (MOR; also known as flexural strength) and cold crushing strength (CCS). In the art, values for MOR of 500,000 kg/m² (50 kg/cm²) or more for CCS of 1,000,000 kg/m² (100 kg/cm²) or more are deemed acceptable for the use as monolithic refractories.

WO 92/17419 A1, EP 0 557 536 A1, WO 86/05481 A1, US 6,846,766 B1 and EP 2 072 482 A1 all disclose particulate compositions for various uses, such as for use in shaped or unshaped refractory compositions.

It is thus an object of the present invention to provide castable refractory compositions on the basis of magnesia and carbon, and having improved properties.

### SHORT DESCRIPTION OF THE INVENTION

The present invention is defined in the appended claims.

In particular, the present invention is embodied by a castable refractory composition consisting dry and wet fractions (liquid constituents), each fraction comprising a plurality of dry or wet components, as the case may be. The castable refractory composition according to the present invention comprises, based on the total weight of the castable refractory composition, between 80 wt.-% and 99 wt.-% of a magnesia aggregate material, and between 0.1 wt.-% and 10 wt.-% carbonaceous material, and between 0.1 wt.-% and 5 wt.-% antioxidant, and a non-aqueous binder. According to the present invention, the water content of the castable refractory composition is 2 wt.-% or less, and the fixed carbon in the composition is no more than about 10 wt.-%. According to the present invention, the antioxidant is selected from boron carbide, silicon carbide, silicon nitride, calcium boride, zirconium boride, aluminium metal, zinc metal, silicon metal, barium metal, titanium metal, one or more aluminium-magnesium alloys, one or more zinc-magnesium alloys, one or more zinc-aluminium-magnesium alloys, or combinations thereof. According to the present invention, the non-aqueous binder comprises one or more esterified fatty acids, such as esterified vegetable oils or biodiesels, or combinations thereof.

According to one embodiment of the present invention, the carbonaceous material of the composition is at least partially present in a coating on the surface of the magnesia aggregate material of the composition. According to one embodiment of the present invention, a coating on the surface of the magnesia aggregate material further comprises one or more non-aqueous binders, or one or more solid hydrocarbons, or one or more antioxidants, or a combination thereof.

According to one embodiment of the present invention, the carbonaceous material present in the castable refractory composition is selected from natural graphite, synthetic graphite, petcoke, carbon black, fusible carbon, pitch, and combinations thereof.

According to one embodiment of the present invention, the antioxidant present in the castable refractory composition is selected from aluminium metal and/or boron carbide.

The esterified fatty acid may have a molecular weight ranging in the range of 1,000 to 10,000 and/or a viscosity in the range of 0.02 to 0.15 Pa·s (20 to 150 cps).

According to further embodiments of the present invention, the castable refractory composition may further comprise one or more additives, such as, for example, dispersants, viscosity modifiers, hardeners, accelerators, surfactants, and/or cross-linking catalysts.

Also part of the present invention is the use of a castable refractory composition in the formation or repair of a monolithic refractory composition by a casting, spray-casting, gunning, self-flowing, ramming, shotcrete or patching process, for example in the formation of a monolithic refractory lining.

Also part of the present invention is a method of making a monolithic refractory lining comprising the steps of providing a mixture of at least a portion of said plurality of dry components to obtain a dry mix, providing a mixture of one or more liquid components, excluding hardeners, to obtain a liquid mixture, mixing the provided dry mix with the provided liquid mixture and optionally adding one or more non-aqueous binders to obtain a homogenised castable refractory composition, installing the obtained homogenised castable refractory composition using a casting, vibration casting, spray-casting, gunning, self-flowing, ramming, or shotcrete process, and curing the installed homogenised castable refractory composition to obtain a monolithic refractory lining. Optionally, one or more hardeners are added to the homogenised castable refractory composition prior to the installation step.

According to one embodiment of the present invention, at least a portion of the carbonaceous material is included in the mixture of one or more of the liquid components when providing the mixture of one or more liquid components.

According to one embodiment of the present invention, the method is used to provide monolithic refractory linings having a modulus of rupture (MOR) in the range of 500,000 kg/m² (50 kg/cm²) or more, such as from 500,000 kg/m² to 2,000,000 kg/m² (50 to 200 kg/cm²), and/or a cold crushing strength (CCS) in the range of 1,000,000 kg/m² (100 kg/cm²) or more such as from 1,000,000 to 4,000,000 kg/m² (from 100 to 400 kg/cm²), and/or a porosity in the range of 5 to 12%. The curing in the final step of the method may be carried out at a temperature of 150°C to 250°C, such as at a temperature of 180°C to 220°C, for example at about 200°C, for 12 to 36 h, for example for about 24 h.

Also part of the present invention is a method of repairing a monolithic refractory lining comprising the steps of providing a mixture of at least a portion of said plurality of dry components to obtain a dry mix, providing a mixture of one or more liquid components, excluding hardeners, to obtain a liquid mixture, mixing the provided dry mix with the provided liquid mixture and optionally adding one or more non-aqueous binders to obtain a homogenised castable refractory composition, applying the said homogenised castable refractory composition obtained at the end of step (c) to the monolithic refractory lining to be repaired, using a patching process; and curing said applied homogenised castable refractory composition obtained at the end of step (e) to obtain a repaired monolithic refractory lining. Optionally, one or more hardeners are added to the homogenised castable refractory composition prior to the installation step.

It is understood that the following detailed description of the invention and references to experimental results concern exemplary embodiments of the present invention and shall not be limiting the scope of the claims.

### DETAILED DESCRIPTION OF THE INVENTION

The present invention according to the appended claims provides an essentially water-free magnesia-based composition for use as a castable refractory material. It has been found that a combination of non-aqueous binders, anti-oxidants and carbonaceous materials with magnesia aggregate material provides castable refractory compositions that may be used either for the production of monolithic refractory linings, or as gunnable compositions for repairing damaged refractory (brick) structures.

### Magnesium Oxide

According to the present invention, the castable refractory composition comprises80 wt.-% to 99 wt.-% MgO, such as aggregate MgO. The magnesia content of the castable refractory composition may be from about 80 wt.-% to 98 wt.-%, or from about 85 wt.-% to 95 wt.-%. The magnesia comprised in the castable refractory composition according to the present invention may be commercially available fused magnesia, which normally has a purity of about 97 %.

The magnesia comprised in the castable refractory composition according to the present invention may have a broad particle size distribution below 5 mm, such that it comprises substantial amounts of particles having a particle diameter of 2 to 5 mm, and of particles having a diameter of 1 to 2 mm, and of particles having a diameter of 0.5 to 1 mm, and of particles having a diameter below 0.5 mm, and of particles having a size of 170 mesh (88 µm) or below.

In one embodiment of the present invention, the particle size distribution of the magnesia used in the castable refractory composition according to the present invention is a multimodal distribution, such as for example a bimodal distribution. As used herein, in a bimodal particle size distribution, the representing curve of which exhibits two distinct peaks, in and a multimodal the representing curve of which exhibits two or more distinct peaks. For example, the curve representing the particle size distribution of the magnesia comprised in the castable refractory composition according to the present invention may have a first maximum peak at a particle size between 2 and 5 mm, and a second maximum peak at a particle size smaller than 88 µm. Also for example, the curve representing the particle size distribution of the magnesia comprised in the castable refractory composition according to the present invention may have a first maximum peak at a particle size between 2 and 5 mm, and three further maximum peaks at particle sizes of about 40 µm, about 18 µm and at about 4 µm. Alternatively, the magnesia comprised in the composition according to the present invention may comprise an ultrafine component, consisting of (a) ground magnesia (fused magnesia or sea water dead burned magnesia or earth dead burned magnesia) with a d₅₀ between 1.5 and 4 µm, or close to crystal size; or (b) a precipitated (caustic) magnesia having a d₅₀ below 1.5 µm and a BET specific surface area in the range of 5 to 500 m²·g⁻¹; or (c) magnesia resulting from chemical disintegration of magnesium silicates and having a BET specific surface area in the range of 1 to 10 m²·g⁻¹.

### Carbonaceous material

The carbonaceous material comprised in the castable refractory composition according to the present invention may be selected from a broad variety of carbonaceous compounds, including natural graphite, synthetic graphite, petcoke, carbon black, fusible carbon, pitch and combinations thereof. The carbonaceous material may be selected such that the total castable refractory composition according to the present invention does not comprise more than 10 wt.-% fixed carbon . The skilled person in the art will appreciate that the liquid components of the composition according to the invention will not provide any fixed carbon to the composition. The fixed carbon in the product will thus only originate from the solid carbonaceous materials. In one embodiment, it is not preferred that the carbonaceous material is selected from tar, wood or charcoal.

In one embodiment, the carbonaceous material is present as medium thermal carbon black. In one embodiment, the carbonaceous material is at least partially present as graphite flakes having an average particle size smaller than 72 mesh (below 200 µm).

In one embodiment, the carbonaceous material is at least partially present in the castable refractory composition according to the invention as graphite in a coating on the surface of the magnesia particles. Coated magnesia particles are obtained by mixing graphite particles with an organic binder, followed by treatment of the magnesia particles with said graphite/binder combination. The use of graphite in coatings on magnesia particles according to the present invention has the advantage that commonly occurring surface chemistry problem of graphite, such as reduced wettability and high shape factor leading to poor mixing properties in the castable and reduced fluidity thereof, are avoided.

### Antioxidant

The antioxidant comprised in the castable refractory composition according to the present invention is selected from boron carbide, silicon carbide, silicon nitride, calcium boride, zirconium boride, aluminium metal, zinc metal, silicon metal, barium metal, titanium metal, aluminium-magnesium alloys, zinc-magnesium alloys, zinc-aluminium-magnesium alloys, and combinations thereof.

In one embodiment, the antioxidant is aluminium metal and/or boron carbide, such as for example a mixture of aluminium metal and boron carbide. In one embodiment, aluminium metal may be present in the castable refractory composition according to the present invention in an amount of 0.1 wt.-% to 5 wt.-%, such as for example in an amount of 1 wt.-% to 3 wt.-%, such as for example about 2 wt.-%. In one embodiment, boron carbide may be present in the castable refractory composition according to the present invention in an amount of 0.1 wt.-% to 5 wt.-%, such as for example in an amount of 0.5 wt.-% to 2 wt.-%, such as for example about 1 wt.-%.

In one embodiment, it is not preferred that the antioxidant is selected from ferrosilicon nitride, from SiAlON (oxinitrides), or from alkali metals.

### Non-aqueous binder

The non-aqueous binder comprised in the castable refractory composition according to the present invention may further comprise (a) polyhydric compounds, (b) epoxy compounds, optionally in combination with amine hardeners, (c) isocyanates, (d) reaction rate modifying agents or cross-linking agents, (e) polyester resins, (g) diluents, (h) surface active agents, and combinations thereof.

In one embodiment, polyhydric compounds for use as non-aqueous binders comprised in the castable refractory composition according to the present invention may be selected from phenolic resole resins, polyether polyols including polyethylene glycol, polypropylene glycol, polytetramethlyene glycol; polyester polyols from aliphatic and/or aromatic polycarbonates, polycaprolactones, adipates, terephthalates and mixtures thereof. Also suitable according to the present invention are polyhydroxylated natural oils and/or their derivatives such as linseed oil, and castor oil. In one embodiment, the inherent water content of the hydroxide bearing component does not exceed 2.0 wt.-%. The polyfunctional hydric compounds utilised in the present invention may have a molecular weight of 600 or above and a functionality of 2 or more. Examples of specific polyhydric compounds further include but are not limited to Valires RO 100.02, Valires RO 100.42, Valires RD 300.25, Corrosol 433264, such compounds as described in "Chemistry and Technology of Polyols for Polyurethanes", as published by Smithers Information Limited (January 2005) on pages 400 to 407, 424 to 431 and 439 to 455. In one embodiment, the polyhydric component or mixture of components should be comprised in the castable refractory composition according to the invention in an amount in the range from 1.0 to 6.0 wt.-%, based upon total mass of the composition.

In one embodiment, epoxy-compounds for use as non-aqueous binders comprised in the castable refractory composition according to the present invention may be a liquid having an equivalent epoxy weight in the range 150 to 250 (g/eq). The viscosity of the epoxy resin may be in the range of from 500 to 20000 mPa.s, such as in the range of from 500 to 15000mPa.s. The functionality of the epoxy resin may be 2 or more glycidyl groups per molecule. A suitable epoxy staring material may be an epichlorohydrin-functionalised novolac resin (available under the trade name D.E.N.* 431 Epoxy Novolac from DOW), and those described in "Chemistry and Technology of Polyols for Polyurethanes", as published by Smithers Information Limited (January 2005) on pages 455 to 456. In one embodiment, the epoxy-compounds or mixture thereof may be comprised in the castable refractory composition according to the invention in an amount in the range from 1.0 to 6.0 wt.-%, based upon total mass of the composition. The epoxy compounds are optionally used in combination with amine hardeners.

In one embodiment, isocyanates for use as non-aqueous binders comprised in the castable refractory composition according to the present invention may be selected from aromatic isocyanates, aliphatic isocyanates or a combination of aromatic and aliphatic isocyanates. The isocyanates may have an isocyanate(-NCO) functionality of 2 or higher. Specific isocyanates may be polyisocyanates such as 4,4'-dicyclohexylmethane diisocyanate (H12MDI), 1,4-cyclohexane diisocyanate (CHDI), 3-isocyanatomethyl-3,5,5-trimethylcyclohexyl isocyanate, i.e. isophoronediisocyanate (IPDI), 2,4- and 2,6-toluene diisocyanate (TDI) or mixtures thereof, toluidine diisocyanate, 2,2'-, 2,4'- and/or 4,4'-diphenylmethlyene diisocyanates (MDI) or mixtures thereof, 1,2-naphthylene diisocyanate, xylene diisocyanate, tetramethylxylenediisocyanate (TMXDI) and mixtures thereof. Further suitable isocyanates for use in the present invention are commercially available, for example from BAYER (Lupranat), BASF (Desmodur), Huntsman (Suprasec), or other providers. Linked polyisocyanates, and those containing heteroatoms are also suitable for use in the present invention and include polyisocyanates containing urea, urethane, biuret, allophonate, uretidinedione, isocyanurate, imide, carbodimide, uretonimine groups and the like. One suitable isocyanate for use in the present invention is the polymeric form of MDI, with a viscosity in the range of 100 to 5000 mPa.s, such as from 100 to 2000 mPa.s. Also appropriate for the present invention are isocyanate-based pre-polymers synthesised from polyisocyanates, polyhydric compounds, pre-polymers of isocyanate. All of the above polyhydric compounds are suitable as starting materials for the synthesis of polyisocyanateprepolymers with an -NCO value of 2 or more. The isocyanate content may be in the range 10 to 50 wt.-% of the total binder in the composition, and may constitute from 0.5 to 5.0 wt.-% the of castable refractory composition according to the invention.

In one embodiment, reaction rate modifying agents or cross-linking agents for use as non-aqueous binders comprised in the castable refractory composition according to the present invention may be selected from divalent metal catalysts, such as metals capable of forming suitable redox pairs selected from compounds containing cobalt, lead, manganese, cerium, calcium, zinc, zirconium, or mixtures thereof. In one embodiment, these may be selected from lead 2-ethylhexonate, 2-ethylhexonate, and cerium 2-ethylhexonate. These agents have a dual function as a polyurethane catalyst or an initiator for radical polymerisation in polyester resins. In one embodiment, the reaction rate modifying agents or cross-linking agents should be comprised in the castable refractory composition according to the invention in combination with a polyhydric component in amount in the range from 0.1 to 5.0 wt.-%, based upon total mass of the polyhydric component. The epoxy compounds are optionally used in combination with DPA (N-(3-Dimethylaminopropyl-)-N,N-Diisopropanolamine) and/or amine accelerators.

In one embodiment, a polyester resin for use as non-aqueous binders comprised in the castable refractory composition according to the present invention may be a styrene free vinyl polyester (e.g. dissolved in methacrylates), which is crosslinkable with peroxide and redox metal pair (commercially known as Alcotac Premium 100). This may be used in combination with other binders and act as a reactive diluent in the composition according to the present invention.

In one embodiment, diluents for use as non-aqueous binders comprised in the castable refractory composition according to the present invention may be selected from organic and inorganic esters, aliphatic and aromatic hydrocarbons. Suitable organic esters include but are not limited to phthalic acid, adipic acid, sebacic acid, fumaric acid, maleic acid, itaconic acid and citric acid. Suitable inorganic esters include but are not limited to triethylphosphate and tris-(1-chloro-2-propyl)phosphateare. Suitable aromatic hydrocarbons include xylenes, toluene, naphthalene, solvent naptha heavy aromatics, hydro treated heavy naphthenic distillates, and kerosene (fractional distillate from 90°C to 152.5°C). Suitable oleochemicals include polymerised cashew nut oil and castor oil. Suitable commercial diluents are available under the trade names Sovermol 1058, Durez 37033, Nytex 4700, Nyprint 863 and Nyflex 223. In one embodiment a diluent or diluents mixture may be comprised in the castable refractory composition according to the invention in an amount in the range from 0.1 to 1.0 wt.-%, based upon total mass of the composition.

In one embodiment, a surface active agent for use as a non-aqueous binder comprised in the castable refractory composition according to the present invention may be Solsperse^{®} 3000 (polymeric dispersant provided by Lubrizol, Ltd., Blackley, United Kingdom; CAS No. 86753-77-7), and act to enhance the installation characteristics of the castable refractory composition according to the present invention. In one embodiment a surface active agent be comprised in the castable refractory composition according to the present invention in an amount in the range from 0.1 to 1.0 wt.-%, based upon total mass of the composition.

In one embodiment, the binder present in the castable refractory composition according to the invention being one or more esterified fatty acids (EFA), such as esterified vegetable oils and/or esterified biodiesels, is present in the composition as part of a coating of graphite and EFA on the aggregated magnesia particles. In one embodiment, the esterified fatty acid has a molecular weight ranging in the range of 1,000 to 10,000 and/or a viscosity in the range of 0.02 to 0.15 Pa·s (20 to 150 cps).

In one embodiment, it is not preferred that the binder further comprises a thermoplastic resin or a natural resin.

### Moisture content

The castable refractory compositions according to present invention are specific in that they contain no more than 2 wt.-% water, for example no more than 1 wt.-% water, or even no more than 0.5 wt.-% water. There is no technical lower limit for the amount of water present in the compositions, since water is not required in the composition according to the invention to perform well. As described in the introductory part of this application, water is often detrimental to the performance of magnesia-containing refractories due to the formation of brucite in the composition, resulting from hydration of magnesia. The lower limit of water content in the composition is determined by external factors, such as moisture in the atmosphere, cost and ease of drying components and equipment, etc. Any water present in the composition is there inherently and not included as a separate or deliberate component. According to the present invention, the castable refractory composition has solid and (non-aqueous) liquid components, which render the mixture castable and/or gunnable. It has been shown that the non-aqueous liquid components provide sufficient flowability to the composition for it to be practical to install, e.g. in metallurgical ladles, to form monolithic refractory linings after curing.

### Fixed carbon

According to the present invention, the castable refractory composition comprises no more than 10 wt.-% fixed carbon. In one embodiment, the castable refractory composition comprises no more than 8 wt.-% and no less than 3 wt.-% fixed carbon, such as no more than 6 wt.-% fixed carbon, such as, for example from 3.5 to 5.5 wt.-% fixed carbon. The fixed carbon derives from the solid hydrocarbons present in the composition. The inclusion of solid hydrocarbons allows to obtain improved thermal conductivity, thermal shock resistance, and/or corrosion resistance in the final product.

The amount of fixed carbon in the composition is determined according to Indian Standard Procedure IS 1350 (Part 1, 1984). According to this Standard, 1 g of material is dried at 108°C for one hour. The weight loss is reported as moisture percentage (A). Then, 1 g of material is treated at 800°C for one hour, and the retained material is reported as ash (B). Then, 1 g of material is treated at 900°C for 7 minutes under air exclusion conditions. The weight loss, minus (A), is reported as volatile matter (C). The fixed carbon is determined as a percentage 100 - A - B - C.

The fixed carbon values of various components used according to the present invention are shown in the following Table A:

**Table A**

| Material | Fixed Carbon, % |
|---|---|
| Graphite Coated Fused Magnesia | 3.8 |
| Medium Thermal Carbon Black | 99.5 |
| B₄C | 18 |
| EFA coated graphite | 60 |
| Coal Pitch Derived Fusible Carbon | 82.5 |
| Graphite flakes (94%) | 94 |

### Use of the compositions

It has been found that while the castable refractory compositions are suitable for use in forming monolithic refractory linings for metallurgical vessels, by casting, spray-casting, gunning, self-flowing, ramming, or shotcrete. They are also suitable as gunning or patching solutions for repairing magnesia-carbon brick linings. Methods for forming monolithic refractory linings and for repairing magnesia-carbon brick linings are known in the art.

These uses form part of the invention according to the present application.

### Method of formation

According to the present invention, castable refractory compositions can be obtained by (a) providing a mixture of at least a portion of said plurality of dry components of a castable refractory compositions of the present invention, to obtain a dry mix; (b) providing a mixture of one or more of the liquid components of any one of the castable refractory compositions of the present invention, with the exception of any hardener used, to obtain a liquid mixture; (c) mixing the dry mix with the liquid mixture and optionally adding one or more non-aqueous binders, to obtain a homogenised castable refractory composition; (d) optionally adding one or more hardeners to said homogenised castable refractory composition; (e) installing the said homogenised castable refractory composition obtained at the end of step (c) or (d), using a casting, vibration casting, spray-casting, self-flowing, ramming or shotcrete process; and (f) curing said installed homogenised castable refractory composition obtained at the end of step (e) to obtain a monolithic refractory lining. At the end of step (e) the composition is left to set to provide a ceramic green body for curing in step (f). During the setting step, the composition is simply left at room temperature. During the curing step (f), bond formation for development of strength and stability of the set monolithic lining occurs, and the composition may be heated to a temperature of 150°C to 250°C, or to a temperature of about 200°C, for a period of 12 h to 36 h, such as for about 24 h during the curing step (f).

According to one alternative embodiment, steps (b) and (d) are carried out simultaneously in a step (b'). In this case, any hardener used in the formulation is first mixed with the one or more further liquid components (steps (b) and (d)), and next the dry mix and the liquid mixture (including any hardener) are mixed with optional addition of one or more non-aqueous binders to obtain a homogenised castable refractory composition. The said homogenised castable refractory composition may then be used on a further step (e') in a gunning process, followed by (f') curing to obtain a monolithic refractory lining.

According to one alternative embodiment, at least a portion of the carbonaceous material in the castable refractory composition is not included in the solid mix provided, but included or dissolved in the liquid mixture of step (b).

### EXAMPLES

In the following, modulus of rupture (MOR) and cold crushing strength (CCS) were measured in accordance with Indian Standard IS 10570. Flow tests have been carried out in accordance with European Standard EN 1402.

### Example 1

According to initial studies, magnesia-based castable refractory compositions comprising non-aqueous binders according to the present invention were compared to compositions comprising aqueous systems. The compositions were compared for (a) flow value after mixing and (b) their resistance to hydration, using a visual observation of cracks after the compositions were allowed to set for 24 hours at a temperature of 80°C at 90% relative humidity. The compositions are listed in table 1, with the total liquid amounts indicated:

**Table 1**

| | Comparative Example | Example 1 |
|---|---|---|
| Fused Magnesia 97 2-5 mm | 23 | 30 |
| Fused Magnesia 97 1-2 mm | 14 | 10 |
| Fused Magnesia 97 0.5/1 mm | 13 | 10 |
| Fused Magnesia 97 -0.5 mm | 14 | 14 |
| Fused Magnesia 97 -170 mesh | 26.5 | 29.4 |
| Reactive Magnesia | 3 | |
| Medium Thermal Carbon Black | 3.6 | 3.6 |
| Aluminium Metal | | 2 |
| B₄C | 0.7 | 1 |
| SHMP | 0.2 | |
| Sodium Salt of Polynaphthalene Sulfonic Acid | 0.035 | |
| Citric Acid | 0.03 | |
| High Alumina Cement | 2 | |
| polypropylene fibre | 0.05 | |
| % of water | 5.7 | |
| Precursor to a high molecular Poly-hydric compound | | 4.37 |
| Accelerator | | 0.01 |
| Diluent | | 0.7 |
| **Total Liquid - 1** | | 5.08 |
| Hardener (Liquid - 2) | | 0.9 |
| **Total Liquid (Liquid - 1+ Liquid 2)** | 5.7 | 5.98 |
| **Fixed Carbon (%)** | 3.71 | 3.76 |

The diluent used in Example 1 is an fatty acid ester.

The rheological properties of the compositions are shown in Table 2:

**Table 2**

| | Comparative Example | Example 1 |
|---|---|---|
| T₀, % | 100 | 101 |
| T₃₀, % | 100 | 70 |
| Setting Time, Minutes | 90 | 240 |

Both compositions have similar flow properties, while the setting time of the composition according to the present invention is longer, but still acceptable. With regards to the resistance to hydration, it was found that in the comparative example, crack formation was high, which is attributed to the formation of brucite in the composition, as well as a week mass bonding. On the other hand, no crack development was observed in the Example 1 according to the invention.

Further experiments showed that brucite formation in the comparative Example reached a maximum at a temperature of 150°C.

It was concluded that the inventive concept using non-aqueous binder permits to have better and easier dispersion of carbon (graphite) than in water, which is shown by the better flow at constant volume fraction of liquids. Furthermore, the presence of non-aqueous binder, leads to high resistance in the hydration test, while the water-based composition has very poor resistance in the hydration test.

### Examples 2 to 5

Four castable refractory compositions according to the invention were prepared, along with a composition with a magnesia silicate hydrate binder (fumed silica and water included in the composition). The compositions are shown in Table 3:

**Table 3**

| | Example 2 | Example 3 | Example 4 | Example 5 | Comparative Example 2 |
|---|---|---|---|---|---|
| Fused Magnesia 97 2-5 mm | 30 | | 30 | 30 | 23 |
| Fused Magnesia 97 1-2 mm | 10 | | 10 | 10 | 14 |
| Fused Magnesia 97 0.5/1 mm | 10 | 10 | 9 | 9 | 13 |
| Fused Magnesia 97 -0.5 mm | 14 | 14 | 18 | 18 | 14 |
| Fused Magnesia 97 -170 mesh | 19 | 19 | 18 | 14.4 | 28 |
| Graphite Coated Fused Magnesia 97 2/5mm | | 30 | | | |
| Graphite Coated Fused Magnesia 97 1/2mm | | 10 | | | |
| Fused Magnesia 97 250 mesh | 10.4 | 10.4 | 6.4 | 10 | |
| EFA Coated Graphite | | | 1.33 | | |
| Coal Pitch Derived Fusible Carbon | | | 1 | 1 | |
| Graphite +72 mesh (flakes 94%) | | | | 1 | |
| polypropylene fibre | 0.04 | 0.04 | 0.04 | 0.04 | |
| Fumed Silica | 0 | 0 | 0 | 0 | 5 |
| Medium Thermal Carbon Black | 3.6 | 3.6 | 3.6 | 3.6 | 3 |
| Aluminium Metal | 2 | 2 | 2 | 2 | |
| B₄C | 1 | 1 | 1 | 1 | |
| Modified Oxy - Lignin | 0 | 0 | 0 | 0 | 0.35 |
| Precursor to a high molecular Polyhydric compound | 4.2 | 4.63 | 5.03 | 4.63 | |
| Accelerator | 0.0096 | 0.005 | 0.005 | 0.005 | |
| Diluent | 0.673 | 0.7 | 0.7 | 0.7 | |
| **Total Liquid - 1** | 4.88 | 5.33 | 5.735 | 5.335 | |
| Hardener **(Liquid** - **2)** | | 0.95 | 0.72 | 0.95 | |
| %Water | 0 | 0 | 0 | 0 | 4.8 |
| **Total Liquid (Liquid 1 + 2)** | 5.75 | 6.285 | 6.455 | 6.285 | 4.8 |
| **Fixed Carbon (%)** | 3.76 | 5.28 | 5.38 | 5.52 | 2.98 |

The composition according to Example 2 is similar to Example 1. The composition according to Example 3 comprises graphite-coated magnesia. The composition according to Example 4 comprises graphite coated with esterified fatty acids and fusible carbon derived from pitch. The composition according to Example 5 comprises graphite flakes having a particle diameter of in the range of 106 to 250 µm and fusible carbon derived from pitch.

The rheological properties of the compositions and the CCS of the uncured compositions are shown in Table 4:

**Table 4**

| | Comparative Example 2 | Example 2 | Example 3 | Example 4 | Example 5 |
|---|---|---|---|---|---|
| T₀, % | 130 | 97 | 100 | 76 | 72 |
| T₃₀, % | 130 | 35 | 30 | 0 | 55 |
| Setting Time, Minutes | 420 | 135 | 150 | 180 | 270 |
| CCS (1 day), kg/cm² | 30 | 24 | 18 | 20 | 18 |

It is concluded that while the compositions according to Examples 2 to 5 have rheologies that are not as good as that of Comparative Example 2, the values are still within the acceptable range.

### Further tests

The compositions of Examples 1 to 5 and comparative Example 2 were cured/sintered under various conditions, and the physical data for modulus of rupture (MOR), cold crushing strength (CCS), permanent linear change (PLC), apparent porosity (AP), bulk density (BD) and total porosity (TP) observed is presented in Tables 5 to 7:

**Table 5**

| | Comparative Example 2 | Example 1 | Example 2 | Example 3 | Example 4 | Example 5 |
|---|---|---|---|---|---|---|
| MOR, kg / cm² | 238 | 80 | 93 | 56 | 109.5 | 53 |
| CCS, kg / cm² | 603 | 183 | 151.33 | 128.67 | 198.5 | 173 |
| AP, % | 5.5 | 8.3 | | 7.68 | 8.025 | 6.65 |
| BD, g/cc | 2.97 | 2.75 | | 2.74 | 2.67 | 2.61 |
| TP, % | 8.6 | 12.22 | | | | |

| | | | | | | |
|---|---|---|---|---|---|---|
| Examples 1 to 5 cured at 200°C for 24 hours; Comparative Example cured at 150°C for 24 hours | | | | | | |

**Table 6**

| | Comparative Example 2 | Example 1 | Example 2 | Example 3 | Example 4 | Example 5 |
|---|---|---|---|---|---|---|
| MOR, kg / cm² | 67 | 39.5 | 48.5 | 45 | 66 | 66 |
| CCS, kg / cm² | 316 | 132 | 150.67 | 168 | 184 | 174 |
| PLC, % | -0.12 | -0.18 | -0.15 | -0.56 | -0.06 | -0.12 |
| AP, % | 14.23 | 13.23 | 13.82 | 14.91 | 14.09 | 6.65 |
| BD, g/cc | | | 2.65 | 2.69 | 2.61 | 2.61 |
| TP, % | | | 16.67 | | | |

| | | | | | | |
|---|---|---|---|---|---|---|
| Examples 1 to 5 fired at 800°C for 3 hours; Comparative Example fired at 1000°C for 3 hours | | | | | | |

**Table 7**

| | Comparative Example 2 | Example 1 | Example 2 | Example 3 | Example 4 | Example 5 |
|---|---|---|---|---|---|---|
| MOR, kg / cm² | 147 | 32 | 51.5 | 47 | 26 | 26 |
| CCS, kg / cm² | 350 | 161 | 179 | 150.5 | 149.5 | 63 |
| PLC, % | 0.12 | 0.18 | 0.33 | 0.13 | 0.305 | 0.62 |
| AP, % | 13.81 | 13.23 | | 15.81 | 16.225 | 15.61 |
| BD, g/cc | | | | 2.68 | 2.59 | 2.52 |

| | | | | | | |
|---|---|---|---|---|---|---|
| Examples 1 to 5 and Comparative Example fired at 1550°C for 3 hours | | | | | | |

It is concluded that even though the values for MOR and CCS in the compositions according to the present invention are not as high as in the Comparative Example, they are nevertheless deemed acceptable for use. Furthermore, it has been shown that no substantial deterioration of permanent linear change, porosity and bulk density is observed in the castable refractory compositions according to the present invention.

The compositions according to Examples 2 to 5 and Comparative Example 2, as well as a commercially obtained MgO-C brick were subsequently tested for their corrosion resistance. Corrosion resistance was tested using an Induction Furnace test with 9060 g steel (AFNOR XC 48) and 600 g slag, using three fusion cycles of 2 hours each. The slag used had the following composition: Al₂O₃: 8.10 wt.-%; CaO: 44.39 wt.-%; Cr₂O₃: 0.14 wt-%; FeO: 15.44 wt-%; K₂O: 0.18 wt-%; MgO: 5.58 wt.-%; MnO: 1.82 wt-%; Na₂O: 0.11 wt.-%; P₂O₅: 0.97 wt-%; SO₃: 0.70 wt.-%; SiO₂: 21.72 wt.-%; TiO₂: 0.66 wt.-%; ZrO₂: 0.05 wt.-%; V₂O₅: 0.14 wt-%. After each cycle the slag was replaced with unreacted slag· The real temperature measured using a pyrometer to be 1654°C (average) and 1743°C(maximum). The commercially obtained brick was obtained from Tata refractories and comprised 97.4-% pure MgO, and an apparent porosity of 3.7%, a bulk density of 2.98 g/cm³, a CCS of 342 kg/cm², and a carbon content by elemental analysis of 10.9 wt.-% (as indicated by the manufacturer). The results of the corrosion tests are shown in Table 8.

**Table 8**

| | Comparative Example 2 | MgO-C brick | Example 2 | Example 3 | Example 4 | Example 5 |
|---|---|---|---|---|---|---|
| Global corrosion (mm²) | 1849.5 | 178.3 | 888.5 | 792 | 819 | 690.5 |

It is shown that the compositions according to Examples 2 to 5 have vastly improved corrosion resistance than Comparative Example 2, although not as high as that of the MgO-C bricks according to the state of the art. For this reason, the compositions according to Examples 2 to 5 are suitable both as castable refractory compositions for formation of monolithic linings, and as gunning compositions for repairing and/or replacing damaged bricks in refractory brick linings.

### Examples 7 and 8 - particle size distribution

Castable refractory compositions according to the present invention were prepared wherein the magnesia component has a multimodal particle size distribution. They will be compared to Example 1, and the components of the compositions are shown in Table 9:

**Table 9**

| | Example 1 | Example 7 | Example 8 |
|---|---|---|---|
| Fused Magnesia 97 2-5 mm | 30 | 30 | 40 |
| Fused Magnesia 97 1-2 mm | 10 | 10 | 10 |
| Fused Magnesia 97 0.5/1 mm | 10 | 10 | 7 |
| Fused Magnesia 97 -0.5 mm | 14 | 14 | 8 |
| Fused Magnesia 97 -170 mesh (d₅₀ = 14 µm) | 29.4 | 19 | 18.4 |
| Fused Magnesia 97 -170 mesh (d₅₀ = 7 µm) | | 10.4 | 0 |
| Fused Magnesia 97 -170 mesh (d₅₀ = 3 µm) | | | 10 |
| Medium Thermal Carbon Black | 3.6 | 3.6 | 3.6 |
| Aluminium Metal | 2 | 2 | 2 |
| B₄C | 1 | 1 | 1 |
| polypropylene fibre | 0.04 | 0.04 | 0.04 |
| Precursor to a high molecular Polyhydric compound | 4.37 | 4.2 | 4.37 |
| Accelerator | 0.01 | 0.0096 | 0.01 |
| Diluent | 0.7 | 0.673 | 0.7 |
| **Total Liquid - 1** | 5.08 | 4.88 | 5.08 |
| Hardener (Liquid - 2) | 0.9 | 0.865 | 0.9 |
| **Total Liquid (Liquid - 1+ Liquid 2)** | 5.98 | 5.75 | 5.98 |
| **Fixed Carbon (%)** | 3.76 | 3.76 | 3.76 |

The rheological properties of the compositions are shown in Table 10:

**Table 10**

| | Example 1 | Example 7 | Example 8 |
|---|---|---|---|
| T₀, % | 101 | 97 | 92 |
| T₃₀, % | 70 | 35 | 80 |
| Setting Time, Minutes | 240 | 135 | 270 |
| Wet out time (minutes) | 4 | 3 | 3 |
| Softness of mixture | Good | Good | Very good |

Setting time was measured using the following test method: The composition was wet mixed for 3 minutes and then placed into a mould, and vibrated for 2 × 30s. The compacted composition was then stored at 20°C and the setting tested every 15 minutes using a metallic nail pressed firmly at the top surface of the castable. The setting time is reached when the nail path is no more than 2 mm depth. The wet out time was assessed by a change in sound during wet sample preparation of the castable mix, and the data serves as comparison between the tested samples. Softness of mixture was assessed by feeling the material by hand after wet mixing of the castable material.

It was thus shown that the use of a multimodal particle size distribution leads to further improved rheological properties of the castable refractory compositions according to the present invention.

### Examples 9, 10 and 11 - addition of surfactants

Castable refractory compositions according to the present invention were prepared wherein various surfactants were also added into the mixture. They will be compared to Example 8, and the components of the compositions are shown in Table 11:

**Table 11**

| | Example 8 | Example 9 | Example 10 | Example 11 |
|---|---|---|---|---|
| Fused Magnesia 97 2-5 mm | 40 | 40 | 40 | 40 |
| Fused Magnesia 97 1-2 mm | 10 | 10 | 10 | 10 |
| Fused Magnesia 97 0.5/1 mm | 7 | 7 | 7 | 7 |
| Fused Magnesia 97 -0.5 mm | 8 | 8 | 8 | 8 |
| Fused Magnesia 97 -170 mesh (d₅₀ = 14 µm) | 18.4 | 18.4 | 18.4 | 18.4 |
| Fused Magnesia 97 -170 mesh (d₅₀ = 7 µm) | 0 | 0 | 0 | 0 |
| Fused Magnesia 97 -170 mesh (d₅₀ = 3 µm) | 10 | 10 | 10 | 10 |
| Medium Thermal Carbon Black | 3.6 | 3.6 | 3.6 | 3.6 |
| Aluminium Metal | 2 | 2 | 2 | 2 |
| B₄C | 1 | 1 | 1 | 1 |
| polypropylene fibre | 0.04 | 0.04 | 0.04 | 0.04 |
| Precursor to a high molecular Polyhydric compound | 4.37 | 3.89 | 3.95 | 3.89 |
| Accelerator | 0.01 | 0.0098 | 0.01 | 0.0098 |
| Diluent | 0.7 | 0.687 | 0.7 | 0.687 |
| Surfactant 1 (S-Active Polymeric Dispersant) | 0 | 0.1 | 0 | 0 |
| Surfactant 2 (Hydroxy functional carboxylic acid ester - 108) | 0 | 0 | 0.5 | 0 |
| Surfactant 3 (Solution of a copolymer with filler affinic group) | 0 | 0 | 0 | 0.1 |
| **Total Liquid - 1** | 5.08 | 4.68 | 5.16 | 4.68 |
| Hardener (Liquid - 2) | 0.9 | 0.795 | 0.81 | 0.795 |
| **Total Liquid (Liquid - 1+ Liquid 2)** | 5.98 | 5.48 | 5.97 | 5.48 |
| **Fixed Carbon (%)** | 3.76 | 3.76 | 3.76 | 3.76 |

Surfactant 1 is Solsperse^{®} 3000, a polymeric dispersant provided by Lubrizol, Ltd., Blackley, United Kingdom; CAS No. 86753-77-7. Surfactant 2 is DISPERBYK-108, a hydroxyl-functional carboxylic acid ester with a pigment affinic group, provided by BYK Asia Pacific Private Limited (BYK-Chemie GmbH, Wesel, Germany). Surfactant 3 is DISPERBYK-103, a copolymer solution having a filler affinic group, also provided by BYK Asia Pacific Private Limited.

The rheological properties of the compositions are shown in Table 12:

**Table 12**

| | Example 8 | Example 9 | Example 10 | Example 11 |
|---|---|---|---|---|
| T₀, % | 92 | 118 | 90 | 105 |
| T₃₀, % | 80 | 105 | 60 | 60 |
| Setting Time, Minutes | 270 | 480 | 210 | 150 |
| Wet out time (minutes) | 3 | 3 | 3 | 3 |
| Softness of mixture | Very good | Excellent | Very good | Outstanding |

Setting time, wet out time and softness were assessed as shown above. These examples show that the addition of surfactants allows to further reduce the amount of liquid required in the castable refractory mixtures according to the present invention. Examples 9 and 11 require an even further reduced amount of total liquid of 5.48%, giving excellent and outstanding results for mixture softness and having improved flow compared to the composition not including a surfactant, which will lead to improved placement behaviour. This shows a further advantage of the compositions according to the present invention.

### Examples 12 and 13 - use of different grades of carbonaceous material

Castable refractory compositions according to the present invention were prepared wherein various grades and amounts of carbonaceous material were used. They will be compared to Example 11, and the components of the compositions are shown in Table 13.

**Table 13**

| | Example 11 | Example 12 |
|---|---|---|
| Fused Magnesia 97 2-5 mm | 40 | 40 |
| Fused Magnesia 97 1-2 mm | 10 | 10 |
| Fused Magnesia 97 0.5/1 mm | 7 | 7 |
| Fused Magnesia 97 -0.5 mm | 8 | 7 |
| Fused Magnesia 97 -170 mesh (d₅₀ = 14 µm) | 18.4 | 18.4 |
| Fused Magnesia 97 -170 mesh (d₅₀ = 7 µm) | 0 | 0 |
| Fused Magnesia 97 -170 mesh (d₅₀ = 3 µm) | 10 | 10 |
| Medium Thermal Carbon Black | 3.6 | 3.6 |
| Aluminium Metal | 2 | 2 |
| B₄C | 1 | 1 |
| polypropylene fibre | 0.04 | 0.04 |
| Graphite 80 to 150 mesh (94% flakes) | 0 | 1 |
| Precursor to a high molecular Polyhydric compound | 3.89 | 3.89 |
| Accelerator | 0.0098 | 0.0098 |
| Diluent | 0.687 | 0.687 |
| Surfactant 3 (Solution of a copolymer with filler affinic group) | 0.1 | 0.1 |
| **Total Liquid - 1** | 4.68 | 4.68 |
| Hardener (Liquid - 2) | 0.795 | 0.795 |
| **Total Liquid (Liquid - 1+ Liquid 2)** | 5.48 | 5.48 |
| **Fixed Carbon (%)** | 3.76 | 4.70 |

The rheological properties of the compositions are shown in Table 14:

**Table 14**

| | Example 11 | Example 12 |
|---|---|---|
| T₀, % | 105 | 85 |
| T₃₀, % | 60 | 50 |
| Setting Time, Minutes | 150 | 150 |
| Wet out time (minutes) | 3 | 3 |
| Softness of mixture | Outstanding | Good |

Setting time, wet out time and softness were assessed as shown above. These examples show that the addition of surfactants allows to further reduce the amount of liquid required in the castable refractory mixtures according to the present invention. Example 12 shows that the beneficial effects of the current invention are maintained when the amount and type of carbonaceous material is changed.

### Example 14 - repair composition

Like any other monolithic lining, a MgO-C lining after use will also require repair to extend the performance. Repair can be done by trowelling /casting over the virgin MgO-C lining which has to be cleaned and moistened before patching. In this case a non-aqueous slurry, the composition and selected properties of which are presented in Tables 15 and 16 is used for moistening prior to the application of MgO-C patching material (Example 15, 16) presented in Table 17, 18 and 19.

**Table 15**

| Example 14 | |
|---|---|
| Cal. Mag carbon grog (-0.09 mm) | 54.80 |
| BALL CLAY POWDER | 3.00 |
| PROLAC 7014 A(Novalac Resin) | 40.50 |
| CATALYST HEXAMIN | 3.00 |

**Table 16**

| Example 14 | | |
|---|---|---|
| Setting Time | Minutes | Not set at R.T. |
| Viscosity | CPS | 200000 |

**Table 17**

| | Example 15 | | Example 16 |
|---|---|---|---|
| Fused Magnesia 97 2-5 mm | 6 | Cal. Mag carbon grog 2/5 mm | 6 |
| Fused Magnesia 97 1-2 mm | 14 | Cal. Mag carbon grog 2/3 mm | 14 |
| Fused Magnesia 97 0.5/1 mm | 19 | Cal. Mag carbon grog 1/2 m | 19 |
| Fused Magnesia 97 -0.5 mm | 12 | Cal. Mag carbon grog 0.5/1 m | 12 |
| Fused Magnesia 97 -170 mesh | 10 | Cal. Mag carbon grog -0.5 m | 10 |
| Fused Magnesia 97 -170 mesh (d₅₀ = 14 µm) | 31.4 | Cal. Mag carbon grog -170 # | 31.4 |
| Medium Thermal Carbon Black | 3.6 | Carbon N 990 | 3.6 |
| Aluminium Metal Powder | 2 | Aluminium Metal Powder | 2 |
| B4 C | 1 | B4 C | 1 |
| P.P. Fibre | 0.04 | P.P. Fibre | 0.04 |
| Graphite-400 mesh | 1 | Graphite-400 mesh | 1 |
| Ball Clay powder | 1 | Ball Clay powder | 1 |

| **Liquid - 1** | | **Liquid - 1** | |
|---|---|---|---|
| Precursor to a high molecular Poly-hydric compound | 10 | Precursor to a high molecular Poly-hydric compound | 10 |
| Accelerator | 0.2 | Accelerator | 0.05 |

| **Liquid - 2** | | **Liquid** - **2** | |
|---|---|---|---|
| Hardener | 2 | Hardener | 2 |

Properties of Liquids 1 and 2 used in Examples 15 and 16 are presented in Table 18 below.

**Table 18**

| Product | Precursor to a high molecular Poly-hydric compound | Hardener |
|---|---|---|
| Acid Value | <7 | |
| Viscosity (CPS) | 410 +/ - 20 | |
| Specific Gravity | 0.97 | |
| NCO Content | | 30-32 |

Rheology & selected other properties of Examples 15 and 16 are presented in Table 19.

**Table 19**

| | Example 15 | Example 16 |
|---|---|---|
| Flow T₀,% | 63 | 87 |
| T₃₀, % | stiff | 40 |
| Setting Time | 1 hr | 3 hr |

| 200°C/24 hr | | |
|---|---|---|
| BD, g/cc | 2.3 | 2.26 |
| MOR, kg/cm² | 66 | 106 |
| CCS, kg/cm² | 172 | 241 |

Rheology, setting time, bulk density, modulus of rupture and cold crush strength were assessed as shown above. These examples show that the beneficial effects of the current invention are maintained when the material is applied as a patching material to repair a MgO-C lining

## Claims

1. Castable refractory composition, consisting of a plurality of dry components and a plurality of wet components, said castable refractory composition comprising, based on the total weight of the castable refractory composition,
(a) between 80 wt.-% and 99 wt.-% of a magnesia aggregate material;
(b) between 0.1 wt.-% and 10 wt.-% carbonaceous material;
(c) between 0.1 wt.-% and 5 wt.-% antioxidant; and
(d) a non-aqueous binder; wherein
the composition comprises no more than 2 wt.-% water; wherein
the fixed carbon in the composition, as determined according to IS: 1350, Part 1, 1984, is no more than about 10 wt.-% fixed carbon; and wherein
said antioxidant is selected from boron carbide, silicon carbide, silicon nitride, calcium boride, zirconium boride, aluminium metal, zinc metal, silicon metal, barium metal, titanium metal, one or more aluminium-magnesium alloys, one or more zinc-magnesium alloys, one or more zinc-aluminium-magnesium alloys, or combinations thereof, and
wherein said non-aqueous binder comprises one or more esterified fatty acids, such as esterified vegetable oils or biodiesels, or combinations thereof.

2. Castable refractory composition according to claim 1, wherein said carbonaceous material is at least partially present in a coating on the surface of said magnesia aggregate material, and wherein said coating optionally further comprises one or more non-aqueous binders, or one or more solid hydrocarbons, or one or more antioxidants, or a combination thereof.

3. Castable refractory composition according to any one of the previous claims, wherein said carbonaceous material is selected from natural graphite, synthetic graphite, petcoke, carbon black, fusible carbon, pitch, and combinations thereof,
and/or wherein said antioxidant is aluminium or boron carbide, or a mixture thereof.

4. Castable refractory composition according to any one of the previous claims, wherein said esterified fatty acid has a molecular weight ranging in the range of 1,000 to 10,000 and/or a viscosity in the range of 0.02 to 0.15 Pa·s (20 to 150 cps).

5. Castable refractory composition according to any one of the previous claims, further comprising one or more of (a) dispersants, (b) viscosity modifiers, (c) hardeners, (d) accelerators, (e) surfactants, and/or (f) cross-linking catalysts.

6. Castable refractory composition according to any one of the previous claims, wherein said magnesia aggregate material has a bimodal particle size distribution, such that a first peak is in the coarse region between 2 and 5 mm particle size, and a second peak is in the ultrafine particle size region.

7. Castable refractory composition according to any one of the previous claims for use in the formation of a monolithic refractory composition by casting, spray-casting, gunning, self-flowing, ramming, or shotcrete.

8. Use of a castable refractory composition of any one of the previous claims in a casting, vibration casting, spray-casting, gunning, self-flowing, ramming, shotcrete or patching process.

9. Use according to claim 8 for the formation of a monolithic refractory lining or for repairing magnesia-carbon brick linings.

10. Method of making a monolithic refractory lining comprising
(a) providing a mixture of at least a portion of said plurality of dry components of any one of the castable refractory compositions of claims 1 to 6, to obtain a dry mix;
(b) providing a mixture of one or more of the liquid components of any one of the castable refractory compositions of claims 1 to 6, excluding the one or more hardeners of claim 5, to obtain a liquid mixture;
(c) mixing said dry mix with said liquid mixture and optionally adding one or more non-aqueous binders, to obtain a homogenised castable refractory composition of any one of claims 1 to 7;
(d) optionally adding one or more hardeners to said homogenised castable refractory composition;
(e) installing the said homogenised castable refractory composition obtained at the end of step (c) or (d), using a casting, vibration casting, spray-casting, self-flowing, ramming, or shotcrete process;
(f) curing said installed homogenised castable refractory composition obtained at the end of step (e) to obtain a monolithic refractory lining.

11. Method of making a monolithic refractory lining comprising
(a) providing a mixture of at least a portion of said plurality of dry components of any one of the castable refractory compositions of claims 1 to 6, to obtain a dry mix;
(b') providing a mixture of one or more of the liquid components of any one of the castable refractory compositions of claims 1 to 6, to obtain a liquid mixture;
(c) mixing said dry mix with said liquid mixture and optionally adding one or more non-aqueous binders, to obtain a homogenised castable refractory composition of any one of claims 1 to 7;
(e') installing the said homogenised castable refractory composition obtained at the end of step (c), using a gunning process;
(f) curing said installed homogenised castable refractory composition obtained at the end of step (e) to obtain a monolithic refractory lining.

12. Method according to claim 10 or 11, wherein in step (b) or (b'), as the case may be, at least a portion of the said carbonaceous material of any of claims 1 to 6 is included in the mixture of one or more of the liquid components.

13. Method according to claim 10 to 12, wherein the obtained monolithic refractory lining has a MOR in the range of 500,000 kg/m² (50 kg/cm²) or more, and/or a CCS in the range of 500,000 kg/m² (50 kg/cm²) or more, and/or a porosity in the range of 5 to 12%.

14. Method of repairing a monolithic refractory lining comprising
(a) providing a mixture of at least a portion of said plurality of dry components of any one of the castable refractory compositions of claims 1 to 6, to obtain a dry mix;
(b) providing a mixture of one or more of the liquid components of any one of the castable refractory compositions of claims 1 to 6, excluding the one or more hardeners of claim 5, to obtain a liquid mixture;
(c) mixing said dry mix with said liquid mixture and optionally adding one or more non-aqueous binders, to obtain a homogenised castable refractory composition of any one of claims 1 to 7;
(d) optionally adding one or more hardeners to said homogenised castable refractory composition;
(e) applying the said homogenised castable refractory composition obtained at the end of step (c) or (d) to the monolithic refractory lining to be repaired, using a patching process;
(f) curing said installed homogenised castable refractory composition obtained at the end of step (e) to obtain a repaired monolithic refractory lining.

15. Method of repairing a monolithic refractory lining comprising
(a) providing a mixture of at least a portion of said plurality of dry components of any one of the castable refractory compositions of claims 1 to 6, to obtain a dry mix;
(b') providing a mixture of one or more of the liquid components of any one of the castable refractory compositions of claims 1 to 6, to obtain a liquid mixture;
(c) mixing said dry mix with said liquid mixture and optionally adding one or more non-aqueous binders, to obtain a homogenised castable refractory composition of any one of claims 1 to 7;
(e') applying the said homogenised castable refractory composition obtained at the end of step (c) to the monolithic refractory lining to be repaired, using a patching process;
(f) curing said homogenised castable refractory composition obtained at the end of step (e) to obtain a repaired monolithic refractory lining.

## Patentansprüche

1. Gießfähige Feuerfestzusammensetzung, bestehend aus einer Mehrzahl von Trockenkomponenten und einer Mehrzahl von Nasskomponenten, wobei die gießfähige Feuerfestzusammensetzung, bezogen auf das Gesamtgewicht der gießfähigen Feuerfestzusammensetzung, umfasst,
(a) zwischen 80 Gew.-% und 99 Gew.-% eines Magnesiazuschlagstoffs;
(b) zwischen 0,1 Gew.-% und 10 Gew.-% kohlenstoffhaltiges Material;
(c) zwischen 0,1 Gew.-% und 5 Gew.-% Antioxidans; und
(d) ein nichtwässriges Bindemittel; wobei
die Zusammensetzung nicht mehr als 2 Gew.-% Wasser umfasst; wobei
der gebundene Kohlenstoff in der Zusammensetzung, wie gemäß IS: 1350, Part 1, 1984 bestimmt, nicht mehr als etwa 10 Gew.-% gebundener Kohlenstoff ist; und wobei
das Antioxidans ausgewählt ist aus Borcarbid, Siliciumcarbid, Siliciumnitrid, Calciumborid, Zirconiumborid, Aluminiummetall, Zinkmetall, Siliciummetall, Bariummetall, Titanmetall, einer oder mehreren Aluminium-Magnesium-Legierungen, einer oder mehreren Zink-Magnesium-Legierungen, einer oder mehreren Zink-Aluminium-Magnesium-Legierungen, oder Kombinationen davon, und wobei das nichtwässrige Bindemittel eine oder mehrere veresterte Fettsäuren, wie veresterte Pflanzenöle oder Biodiesel, oder Kombinationen davon umfasst.

2. Gießfähige Feuerfestzusammensetzung nach Anspruch 1, wobei das kohlenstoffhaltige Material zumindest teilweise in einer Beschichtung auf der Oberfläche des Magnesiazuschlagstoffs vorhanden ist, und wobei die Beschichtung optional ferner ein oder mehrere nichtwässrige Bindemittel oder einen oder mehrere feste Kohlenwasserstoffe oder ein oder mehrere Antioxidantien oder eine Kombination davon umfasst.

3. Gießfähige Feuerfestzusammensetzung nach einem der vorhergehenden Ansprüche, wobei das kohlenstoffhaltige Material ausgewählt ist aus Naturgraphit, Synthesegraphit, Petrolkoks, Ruß, schmelzbarem Kohlenstoff, Pech und Kombinationen davon,
und/oder wobei das Antioxidans Aluminium oder Borcarbid oder eine Mischung davon ist.

4. Gießfähige Feuerfestzusammensetzung nach einem der vorhergehenden Ansprüche, wobei die veresterte Fettsäure ein Molekulargewicht im Bereich von 1.000 bis 10.000 und/oder eine Viskosität im Bereich von 0,02 bis 0,15 Pa·s (20 bis 150 cps) aufweist.

5. Gießfähige Feuerfestzusammensetzung nach einem der vorhergehenden Ansprüche, ferner umfassend eines oder mehrere von (a) Dispergiermitteln, (b) Viskositätsmodifikatoren, (c) Härtern, (d) Beschleunigern, (e) Tensiden und/oder (f) Vernetzungskatalysatoren.

6. Gießfähige Feuerfestzusammensetzung nach einem der vorhergehenden Ansprüche, wobei der Magnesiazuschlagstoff eine bimodale Partikelgrößenverteilung aufweist, derart, dass ein erster Peak im Grobbereich zwischen 2 und 5 mm Partikelgröße liegt und ein zweiter Peak im Ultrafeinstpartikelgrößenbereich liegt.

7. Gießfähige Feuerfestzusammensetzung nach einem der vorhergehenden Ansprüche zur Verwendung bei der Bildung einer monolithischen Feuerfestzusammensetzung durch Gießen, Spritzgießen, Torkretieren, Selbstfließen, Stampfen oder Spritzbeton.

8. Verwendung einer gießfähigen Feuerfestzusammensetzung nach einem der vorhergehenden Ansprüche in einem Gieß-, Vibrationsgieß-, Spritzgieß-, Torkretier-, Selbstfließ-, Stampf-, Spritzbeton- oder Flickverfahren.

9. Verwendung nach Anspruch 8 zur Bildung einer monolithischen Feuerfestauskleidung oder zum Reparieren von Magnesia-Kohlenstoff-Steinauskleidungen.

10. Verfahren zum Herstellen einer monolithischen Feuerfestauskleidung, umfassend
(a) Bereitstellen einer Mischung von zumindest einem Teil der Mehrzahl von Trockenkomponenten einer der gießfähigen Feuerfestzusammensetzungen der Ansprüche 1 bis 6, um eine Trockenmischung zu erhalten;
(b) Bereitstellen einer Mischung von einer oder mehreren der Flüssigkomponenten einer der gießfähigen Feuerfestzusammensetzungen der Ansprüche 1 bis 6, unter Ausschluss des einen oder der mehreren Härter des Anspruchs 5, um eine Flüssigmischung zu erhalten;
(c) Mischen der Trockenmischung mit der Flüssigmischung und optionales Hinzufügen eines oder mehrerer nichtwässriger Bindemittel, um eine homogenisierte gießfähige Feuerfestzusammensetzung nach einem der Ansprüche 1 bis 7 zu erhalten;
(d) optionales Hinzufügen eines oder mehrerer Härter zu der homogenisierten gießfähigen Feuerfestzusammensetzung;
(e) Einbauen der homogenisierten gießfähigen Feuerfestzusammensetzung, die am Ende von Schritt (c) oder (d) erhalten wurde, unter Verwendung eines Gieß-, Vibrationsgieß-, Spritzgieß-, Selbstfließ-, Stampf- oder Spritzbetonverfahrens;
(f) Aushärten der eingebauten homogenisierten gießfähigen Feuerfestzusammensetzung, die am Ende von Schritt (e) erhalten wurde, um eine monolithische Feuerfestauskleidung zu erhalten.

11. Verfahren zum Herstellen einer monolithischen Feuerfestauskleidung, umfassend
(a) Bereitstellen einer Mischung von zumindest einem Teil der Mehrzahl von Trockenkomponenten einer der gießfähigen Feuerfestzusammensetzungen der Ansprüche 1 bis 6, um eine Trockenmischung zu erhalten;
(b') Bereitstellen einer Mischung von einer oder mehreren der Flüssigkomponenten einer der gießfähigen Feuerfestzusammensetzungen der Ansprüche 1 bis 6, um eine Flüssigmischung zu erhalten;
(c) Mischen der Trockenmischung mit der Flüssigmischung und optionales Hinzufügen eines oder mehrerer nichtwässriger Bindemittel, um eine homogenisierte gießfähige Feuerfestzusammensetzung nach einem der Ansprüche 1 bis 7 zu erhalten;
(e') Einbauen der homogenisierten gießfähigen Feuerfestzusammensetzung, die am Ende von Schritt (c) erhalten wurde, unter Verwendung eines Torkretierverfahrens;
(f) Aushärten der eingebauten homogenisierten gießfähigen Feuerfestzusammensetzung, die am Ende von Schritt (e) erhalten wurde, um eine monolithische Feuerfestauskleidung zu erhalten.

12. Verfahren nach Anspruch 10 oder 11, wobei in Schritt (b) oder (b'), je nach Fall, zumindest ein Teil des kohlenstoffhaltigen Materials nach einem der Ansprüche 1 bis 6 in der Mischung von einer oder mehreren der Flüssigkomponenten enthalten ist.

13. Verfahren nach Anspruch 10 bis 12, wobei die erhaltene monolithische Feuerfestauskleidung eine MOR im Bereich von 500.000 kg/m² (50 kg/cm²) oder mehr und/oder eine CCS im Bereich von 500.000 kg/m² (50 kg/cm²) oder mehr und/oder eine Porosität im Bereich von 5 bis 12 % aufweist.

14. Verfahren zum Reparieren einer monolithischen Feuerfestauskleidung, umfassend
(a) Bereitstellen einer Mischung von zumindest einem Teil der Mehrzahl von Trockenkomponenten einer der gießfähigen Feuerfestzusammensetzungen der Ansprüche 1 bis 6, um eine Trockenmischung zu erhalten;
(b) Bereitstellen einer Mischung von einer oder mehreren der Flüssigkomponenten einer der gießfähigen Feuerfestzusammensetzungen der Ansprüche 1 bis 6, unter Ausschluss des einen oder der mehreren Härter des Anspruchs 5, um eine Flüssigmischung zu erhalten;
(c) Mischen der Trockenmischung mit der Flüssigmischung und optionales Hinzufügen eines oder mehrerer nichtwässriger Bindemittel, um eine homogenisierte gießfähige Feuerfestzusammensetzung nach einem der Ansprüche 1 bis 7 zu erhalten;
(d) optionales Hinzufügen eines oder mehrerer Härter zu der homogenisierten gießfähigen Feuerfestzusammensetzung;
(e) Anwenden der homogenisierten gießfähigen Feuerfestzusammensetzung, die am Ende von Schritt (c) oder (d) erhalten wurde, auf die zu reparierende monolithische Feuerfestauskleidung unter Verwendung eines Flickverfahrens;
(f) Aushärten der installierten homogenisierten gießfähigen Feuerfestzusammensetzung, die am Ende von Schritt (e) erhalten wurde, um eine reparierte monolithische Feuerfestauskleidung zu erhalten.

15. Verfahren zum Reparieren einer monolithischen Feuerfestauskleidung, umfassend
(a) Bereitstellen einer Mischung von zumindest einem Teil der Mehrzahl von Trockenkomponenten einer der gießfähigen Feuerfestzusammensetzungen der Ansprüche 1 bis 6, um eine Trockenmischung zu erhalten;
(b') Bereitstellen einer Mischung von einer oder mehreren der Flüssigkomponenten einer der gießfähigen Feuerfestzusammensetzungen der Ansprüche 1 bis 6, um eine Flüssigmischung zu erhalten;
(c) Mischen der Trockenmischung mit der Flüssigmischung und optionales Hinzufügen eines oder mehrerer nichtwässriger Bindemittel, um eine homogenisierte gießfähige Feuerfestzusammensetzung nach einem der Ansprüche 1 bis 7 zu erhalten;
(e') Anwenden der homogenisierten gießfähigen Feuerfestzusammensetzung, die am Ende von Schritt (c) erhalten wurde, auf die zu reparierende monolithische Feuerfestauskleidung unter Verwendung eines Flickverfahrens;
(f) Aushärten der homogenisierten gießfähigen Feuerfestzusammensetzung, die am Ende von Schritt (e) erhalten wurde, um eine reparierte monolithische Feuerfestauskleidung zu erhalten.

## Revendications

1. Composition réfractaire coulable, constituée d'une pluralité de composants secs et d'une pluralité de composants humides, ladite composition réfractaire coulable comprenant, sur la base du poids total de la composition réfractaire coulable,
(a) entre 80 % en poids et 99 % en poids d'un matériau granulaire de magnésie ;
(b) entre 0,1 % en poids et 10 % en poids de matériau carboné ;
(c) entre 0,1 % en poids et 5 % en poids d'antioxydant ; et
(d) un liant non aqueux ; dans laquelle
la composition ne comprend pas plus de 2 % en poids d'eau ; dans laquelle
la teneur en carbone fixe de la composition, telle que déterminée selon la norme IS 1350, partie 1, 1984, ne dépasse pas environ 10 % en poids de carbone fixe ; et dans laquelle
ledit antioxydant est choisi parmi le carbure de bore, le carbure de silicium, le nitrure de silicium, le borure de calcium, le borure de zirconium, l'aluminium métallique, le zinc métallique, le silicium métallique, le baryum métallique, le titane métallique, un ou plusieurs alliages aluminium-magnésium, un ou plusieurs alliages zinc-magnésium, un ou plusieurs alliages zinc-aluminium-magnésium, ou des combinaisons de ceux-ci, et
dans laquelle ledit liant non aqueux comprend un ou plusieurs acides gras estérifiés, tels que des huiles végétales estérifiées ou des biodiesels, ou des combinaisons de ceux-ci.

2. Composition réfractaire coulable selon la revendication 1, dans laquelle ledit matériau carboné est au moins partiellement présent dans un revêtement sur la surface dudit matériau granulaire de magnésie, et dans laquelle ledit revêtement comprend en outre éventuellement un ou plusieurs liants non aqueux, ou un ou plusieurs hydrocarbures solides, ou un ou plusieurs antioxydants, ou une combinaison de ceux-ci.

3. Composition réfractaire coulable selon l'une quelconque des revendications précédentes, dans laquelle ledit matériau carboné est choisi parmi le graphite naturel, le graphite synthétique, le coke de pétrole, le noir de carbone, le carbone fusible, le brai et des combinaisons de ceux-ci,
et/ou dans laquelle ledit antioxydant est de l'aluminium ou du carbure de bore, ou un mélange de ceux-ci.

4. Composition réfractaire coulable selon l'une quelconque des revendications précédentes, dans laquelle ledit acide gras estérifié présente un poids moléculaire compris dans la plage allant de 1 000 à 10 000 et/ou une viscosité comprise dans la plage allant de 0,02 à 0,15 Pa·s (20 à 150 cps).

5. Composition réfractaire coulable selon l'une quelconque des revendications précédentes, comprenant en outre un ou plusieurs parmi (a) des dispersants, (b) des modificateurs de viscosité, (c) des durcisseurs, (d) des accélérateurs, (e) des tensioactifs et/ou (f) des catalyseurs de réticulation.

6. Composition réfractaire coulable selon l'une quelconque des revendications précédentes, dans laquelle ledit matériau granulaire de magnésie présente une distribution granulométrique bimodale, de telle sorte qu'un premier pic se situe dans la région grossière ayant une granulométrie comprise entre 2 et 5 mm et qu'un second pic se situe dans la région de granulométrie ultrafine.

7. Composition réfractaire coulable selon l'une quelconque des revendications précédentes destinée à être utilisée dans la formation d'une composition réfractaire monolithique par coulage, coulage par projection, gunitage, autocoulage, damage ou béton projeté.

8. Utilisation d'une composition réfractaire coulable selon l'une quelconque des revendications précédentes dans un procédé de coulage, de coulage par vibration, de coulage par projection, de gunitage, d'autocoulage, de damage, de projection de béton ou de réparation.

9. Utilisation selon la revendication 8 destinée à former un garnissage réfractaire monolithique ou destinée à réparer des garnissages en briques de magnésie-carbone.

10. Procédé de fabrication d'un garnissage réfractaire monolithique comprenant
(a) la fourniture d'un mélange d'au moins une partie de ladite pluralité de composants secs de l'une quelconque des compositions réfractaires coulables selon les revendications 1 à 6, pour obtenir un mélange sec ;
(b) la fourniture d'un mélange d'un ou de plusieurs des composants liquides de l'une quelconque des compositions réfractaires coulables selon les revendications 1 à 6, à l'exclusion du ou des durcisseurs selon la revendication 5, pour obtenir un mélange liquide ;
(c) le mélange dudit mélange sec avec ledit mélange liquide et l'ajout, éventuellement, d'un ou de plusieurs liants non aqueux, pour obtenir une composition réfractaire coulable homogénéisée selon l'une quelconque des revendications 1 à 7 ;
(d) l'ajout, éventuellement, d'un ou de plusieurs durcisseurs à ladite composition réfractaire coulable homogénéisée ;
(e) l'installation de ladite composition réfractaire coulable homogénéisée obtenue à la fin de l'étape (c) ou (d), à l'aide d'un procédé de coulage, de coulage par vibration, de coulage par projection, d'autocoulage, de damage ou de projection de béton ;
(f) le durcissement de ladite composition réfractaire coulable homogénéisée installée obtenue à la fin de l'étape (e) pour obtenir un garnissage réfractaire monolithique.

11. Procédé de fabrication d'un garnissage réfractaire monolithique comprenant
(a) la fourniture d'un mélange d'au moins une partie de ladite pluralité de composants secs de l'une quelconque des compositions réfractaires coulables selon les revendications 1 à 6, pour obtenir un mélange sec ;
(b') la fourniture d'un mélange d'un ou de plusieurs des composants liquides de l'une quelconque des compositions réfractaires coulables selon les revendications 1 à 6, pour obtenir un mélange liquide ;
(c) le mélange dudit mélange sec avec ledit mélange liquide et l'ajout, éventuellement, d'un ou de plusieurs liants non aqueux, pour obtenir une composition réfractaire coulable homogénéisée selon l'une quelconque des revendications 1 à 7 ;
(e') l'installation de ladite composition réfractaire coulable homogénéisée obtenue à la fin de l'étape (c), à l'aide d'un procédé de gunitage ;
(f) le durcissement de ladite composition réfractaire coulable homogénéisée installée obtenue à la fin de l'étape (e) pour obtenir un garnissage réfractaire monolithique.

12. Procédé selon la revendication 10 ou 11, dans lequel, à l'étape (b) ou (b'), selon le cas, au moins une partie dudit matériau carboné selon l'une quelconque des revendications 1 à 6 est incluse dans le mélange d'un ou de plusieurs des composants liquides.

13. Procédé selon la revendication 10 à 12, dans lequel le garnissage réfractaire monolithique obtenu présente un MOR de l'ordre de 500 000 kg/m² (50 kg/cm²) ou plus, et/ou un CCS de l'ordre de 500 000 kg/m² (50 kg/cm²) ou plus, et/ou une porosité comprise dans la plage allant de 5 à 12 %.

14. Procédé de réparation d'un garnissage réfractaire monolithique comprenant
(a) la fourniture d'un mélange d'au moins une partie de ladite pluralité de composants secs de l'une quelconque des compositions réfractaires coulables selon les revendications 1 à 6, pour obtenir un mélange sec ;
(b) la fourniture d'un mélange d'un ou de plusieurs des composants liquides de l'une quelconque des compositions réfractaires coulables selon les revendications 1 à 6, à l'exclusion du ou des durcisseurs de la revendication 5, pour obtenir un mélange liquide ;
(c) le mélange dudit mélange sec avec ledit mélange liquide et l'ajout, éventuellement, d'un ou de plusieurs liants non aqueux, pour obtenir une composition réfractaire coulable homogénéisée selon l'une quelconque des revendications 1 à 7 ;
(d) l'ajout, éventuellement, d'un ou de plusieurs durcisseurs à ladite composition réfractaire coulable homogénéisée ;
(e) l'application de ladite composition réfractaire coulable homogénéisée obtenue à la fin de l'étape (c) ou (d) au garnissage réfractaire monolithique destiné à être réparé, à l'aide d'un procédé de réparation ;
(f) le durcissement de ladite composition réfractaire coulable homogénéisée installée obtenue à la fin de l'étape (e) pour obtenir un garnissage réfractaire monolithique réparé.

15. Procédé de réparation d'un garnissage réfractaire monolithique comprenant
(a) la fourniture d'un mélange d'au moins une partie de ladite pluralité de composants secs de l'une quelconque des compositions réfractaires coulables selon les revendications 1 à 6, pour obtenir un mélange sec ;
(b') la fourniture d'un mélange d'un ou de plusieurs des composants liquides de l'une quelconque des compositions réfractaires coulables selon les revendications 1 à 6, pour obtenir un mélange liquide ;
(c) le mélange dudit mélange sec avec ledit mélange liquide et l'ajout, éventuellement, d'un ou de plusieurs liants non aqueux, pour obtenir une composition réfractaire coulable homogénéisée selon l'une quelconque des revendications 1 à 7 ;
(e') l'application de ladite composition réfractaire coulable homogénéisée obtenue à la fin de l'étape (c) au garnissage réfractaire monolithique destiné à être réparé, à l'aide d'un procédé de réparation ;
(f) le durcissement de ladite composition réfractaire coulable homogénéisée obtenue à la fin de l'étape (e) pour obtenir un garnissage réfractaire monolithique réparé.
